Europäisches Patentamt

(19) European Patent Office (11) Publication number: **0 150 128**

Office européen des brevets **B1**

(12) **EUROPEAN PATENT SPECIFICATION**

(45) Date of publication of patent specification: **11.04.90**  (51) Int. Cl.⁵: **G 11 B 15/675**

(21) Application number: **85300439.8**

(22) Date of filing: **23.01.85**

(54) **Video cassette front loading system for video tape recorders.**

(30) Priority: **23.01.84 JP 7834/84 u**
**23.01.84 JP 7835/84 u**
**23.01.84 JP 7837/84 u**
**23.01.84 JP 7838/84 u**
**24.01.84 JP 8671/84 u**
**16.04.84 JP 56094/84 u**
**15.06.84 JP 89841/84 u**
**15.06.84 JP 89845/84 u**
**01.02.84 JP 17843/84**
**07.02.84 JP 21423/84**

(43) Date of publication of application:
**31.07.85 Bulletin 85/31**

(45) Publication of the grant of the patent:
**11.04.90 Bulletin 90/15**

(84) Designated Contracting States:
**DE FR GB**

(56) References cited:
**EP-A-0 080 317    US-A-4 071 859**
**EP-A-0 091 808    US-A-4 295 169**
**EP-A-0 095 815**

(73) Proprietor: **SHARP KABUSHIKI KAISHA**
**22-22 Nagaike-cho Abeno-ku**
**Osaka 545 (JP)**

(72) Inventor: **Naoi, Akira**
**340-14 Arai**
**Yaita-shi Tochigi-ken (JP)**
Inventor: **Yamamoto, Yuichi**
**Kohpo Sankou 3-5 5-chome Wakakusa**
**Utsunomiya-shi Tochigi-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

**Description**

The present invention relates to a cassette loading system, and particularly, but not exclusively to a video cassette front loading system for a video tape recorder.

A known form of video cassette loading system for a video tape recorder is so arranged that the video cassette is inserted with its long side having the cassette front cover entering the recorder first, in a horizontal orientation. In such a system the front face of the video tape recorder is provided with a wide cassette-insertion inlet, thus reducing the space available on the front face for the provision of key switches.

EP-A-0091808 discloses a cassette loading system of this kind. This known system includes a transport mechanism for driving the inserted cassette first horizontally and then vertically downward to an operative position. The drive for the tape transport is provided by a motor driving through a system of gears a rotatable worm gear carrying a radially extending drive arm connected to a drive rod which is attached to and extends across a moveable cassette holder.

It has been proposed in the art of audio cassette recorders to provide a loading system in which the cassette is inserted narrow side first. EP-A-0095815 and US 4071859 both disclose systems of this kind, in which horizontal transport of the inserted audio cassette is followed by a vertical movement thereof to an operating position. In the former of these documents there is disclosed a transport mechanism which lowers the cassette to its operative position while also transporting it horizontally, using a horizontally driven cam rod. The latter document includes a cassette holder into which the cassette is inserted horizontally, and a spring driven mechanism is released when the cassette has been fully inserted, to rotate the cassette holder so as to shift the cassette vertically downwardly. According to the present invention there is provided a cassette loading system comprising:

cassette holder means for holding a cassette;

transport means for horizontally and then vertically transporting the cassette;

detection means for detecting completion of horizontal transporting of the cassette;

means for inhibiting vertical movement of said cassette holder; and

release means arranged to release said inhibition by said inhibiting means in response to the detection by said detection means of the completion of the horizontal transport of said cassette;

characterised in that the transport means includes vertical transporting means which comprises a rotatably driveable cam member having a spiral cam and a cam follower engageable with said spiral cam and coupled to drive the cassette holder vertically as the cam member rotates by virtue of its engagement with said spiral cam.

Preferably, the system further includes a holder arm means pivotally coupled to the cassette holder means and rotatable about a horizontal axis extending perpendicular to the direction of horizontal travel of the cassette, said cam follower being connected to said holder arm means so as to apply a driving force to rotate said holder arm means and thereby drive said cassette holder vertically. Guide means may be provided for guiding the cassette holder as it moves vertically so as to maintain a generally horizontal orientation of the cassette.

In one disclosed embodiment, the inhibiting means comprises;

an L-shaped guide in a fixed frame member and having a first horizontal portion and a second vertical portion, and a projection coupled to the cassette holder means and in engagement with said guide, the vertical movement of the cassette holder means being inhibited by engagement of said projection with said first horizontal portion and said projection being arranged to be brought into engagement with said second vertical portion by said release means in response to said detection by said detection means, said projection being then moveable vertically along said second vertical portion to permit the cassette holder means to be vertically driven by said transport means. An elongate lever is mounted on the cassette holder means and has a detection portion constituting said detection means and positioned so as to be engaged and moved horizontally by the cassette as it completes its horizontal transport, said lever having a horizontally extending portion constituting said release means and carrying said projection at a position spaced horizontally from said detection portion, horizontal movement of said lever by the cassette acting to bring said projection into engagement with said second vertical portion of said L-shaped guide.

In other embodiments, the inhibiting means comprises a moveable stop member engageable with a projection member projecting from said cassette holder means said release means being operable to move said stop member to release said inhibition, a clutch mechanism being provided for operating said release means to move said stop member using drive power derived from the rotational drive of said cam member.

There is preferably further provided lock means for locking said release means against releasing said inhibiting means until said detection means detects said completion of horizontal transport of said cassette. The release means may comprise a rotatable clutch driven member, said lock means being operable in a first position to prevent rotation of said clutch driven member from a first position in which said release member holds the inhibiting means in its inhibiting condition to a second position in which said rotation of said clutch driven member is allowed.

The inhibiting means may be operable when released by said release means to allow an initial vertical movement of said cassette holder means to bring said cam follower into driven engagement with said spiral cam of said cam member to effect the vertical drive of said cassette holder means.

The transport means may include horizontal transporting means for driving the cassette horizontally toward an inner position thereof in which it is held in the cassette holder means, said horizontal transporting means including force limiting means for limiting the horizontal transport force to be applied to the cassette. The horizontal transporting means may comprise driven roller means arranged to be pressed against the cassette, said force limiting means comprising a torque limiter provided in a drive system for the driven roller means.

The cassette loading system is preferably arranged so that a video cassette to be loaded into it is to be inserted with a narrow end first.

Some preferred embodiments of the invention will now be described by way of example with reference to the accompanying drawings, in which:

Fig. 1 is a perspective view of a cassette used with a cassette loading system of the present invention;

Fig. 2 is a bottom view of the cassette viewed from side A of Fig. 1;

Fig. 3 is a side view of a cassette loading system according to a first preferred embodiment of the present invention;

Fig. 4 is a plan view of the system of Fig. 3;

Fig. 5 is a side elevational view of a frame in the cassette loading system of the first preferred embodiment of the present invention;

Fig. 6 is a perspective view of a cassette holder used in the first preferred embodiment of the present invention;

Fig. 7 is a side view of the cassette loading system of the first preferred embodiment of the present invention in its state with a cassette loaded;

Fig. 8 is a side view of the cassette loading system with no cassette loaded, according to a second preferred embodiment of the present invention;

Fig. 9 is a side view of the cassette loading system according to the second preferred embodiment of the present invention in its state with the cassette loaded;

Fig. 10 is a side elevational view of a frame used in the cassette loading system of the second preferred embodiment of the present invention;

Fig. 11 is a side view of a cassette holder used in the cassette loading system of the second preferred embodiment;

Fig. 12 is a front view of a cam plate and a connection plate used in the cassette loading system of the second preferred embodiment;

Fig. 13 is a part sectional view of the cam plate and the connection plate as viewed from line X-X of Fig. 12;

Fig. 14 is a side view of the primary elements of the cassette loading system of the second preferred embodiment, showing the stop condition of a stop mechanism used for the cassette loading system;

Fig. 15 is a side view of the primary elements of the cassette loading system of the second preferred embodiment, showing the state in which the stop mechanism has just been released;

Fig. 16 is a side view of the primary elements of the cassette loading system of the second preferred embodiment, showing the state in which the cassette holder has been lowered;

Fig. 17 is a side view of a cassette holder, showing a modification of a stop member 224 of a slidable bar 223 in the second preferred embodiment;

Fig. 18 is a side view, showing the state in which a bent stop member 235 of a transmission plate 234 is locked by a lock lever 239;

Fig. 19 is a side view, showing the state in which the bent stop member 235 of the transmission plate 234 has been released by rotation of the lock lever 239;

Fig. 20 is a side view, showing the state in which the cassette holder has been lowered following release of the lock of the bent stop member 235 of the transmission plate 234 by the lock lever 239;

Fig. 21 is a side view of the cassette loading system of a third preferred embodiment of the present invention with no cassette loaded;

Fig. 22 is a side view, showing the state with a cassette loaded into the cassette loading system of Fig. 21;

Fig. 23 is a rear view of a cam gear 310;

Fig. 24 is a partially broken view of the cam. gear of Fig. 23;

Figs. 25 and 26 are drawings, showing the operation of the cassette loading system of the third preferred embodiment of the present invention;

Fig. 27 is a side view of a cassette loading system according to a fourth preferred embodiment of the present invention;

Fig. 28 is a plan view of the system of Fig. 27;

Fig. 29 is a side view of a frame of the cassette loading system of the fourth preferred embodiment of the present invention;

Fig. 30 is a side view of a cassette holder in the cassette loading system of the fourth preferred embodiment of the present invention;

Fig. 31 is an enlarged view of a cam wheel in the cassette loading system of the fourth preferred embodiment of the present invention;

Fig. 32 is a sectional view taken along line VII-VII of Fig. 31;

Fig. 33 is a side view of the cassette loading system of Fig. 27 to which a cassette is loaded;

Figs. 34(1), 34(2), and 34(3) are side views of the primary elements of the cassette loading system, explaining the down movement of a holder arm 13 in the fourth preferred embodiment of the present invention;

Fig. 35 is a perspective view of a cassette loading system according to a fifth preferred embodiment of the present invention;

Fig. 36 is a side view of the cassette loading system of Fig. 35;

Fig. 37 is an exploded view of the cassette loading system of Fig. 35;

Fig. 38 is a plan view of a cassette detection means used in the cassette loading system of the fifth preferred embodiment;

Fig. 39 is a side view of the detection means of Fig. 38;

Fig. 40 is a sectional view of a driving pulley 128 and a gear 127 in the embodiment of Fig. 35; and

Fig. 41 is a sectional view of another form of the driving pulley 128 and the gear 127 in the embodiment of Fig. 40.

Attention is now directed to a preferred embodiment of the present invention in which the narrow side of a horizontally positioned cassette is presented to the front surface of a tape recorder in loading the cassette into the recorder and in which the cassette is first horizontally forwarded and then vertically lowered.

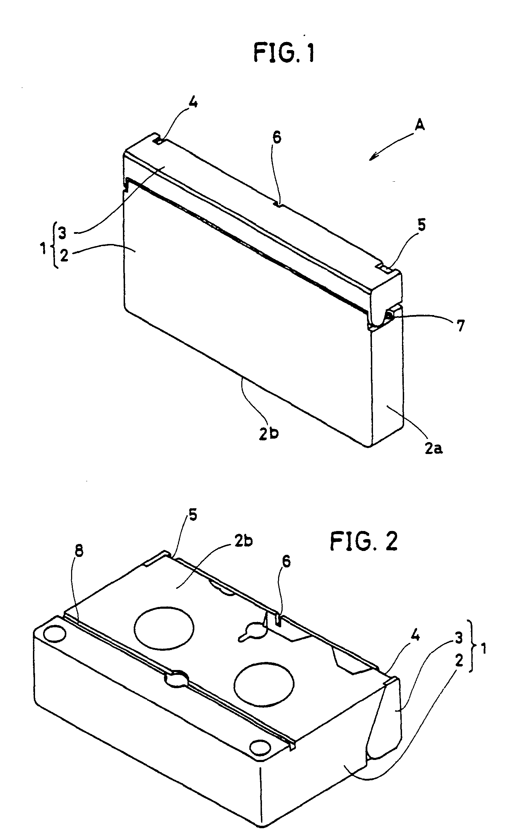

Fig. 1 is a perspective view of video cassette to be handled by a cassette loading system of the present invention. Fig. 2 is a bottom view of the cassette viewed from the arrow side A of Fig. 1.

The cassette 1 comprises a body 2 and a cover 3 pivotally attached to the upper portion of the body 2. Erase preventing claws 4 and 5 are provided at both ends of the cover 3. At the centre of the cover 3, an error-insertion preventing groove 6 is provided for preventing the cassette from being erroneously inserted into the cassette recorder with the wider side of the cassette presented to the inlet face of the recorder. In a side 2a of the body 2, a release projection 7 is provided for releasing the locking of the cover 3. By pressing the release projection 7, the cover 3 can be pivotally opened. In a bottom side 2b of the body 2, a groove 8 is provided for preventing the cassette from being erroneously inserted when it is forwarded with its narrower side horizontal. The groove 8 extends longitudinally of the cassette body 2.

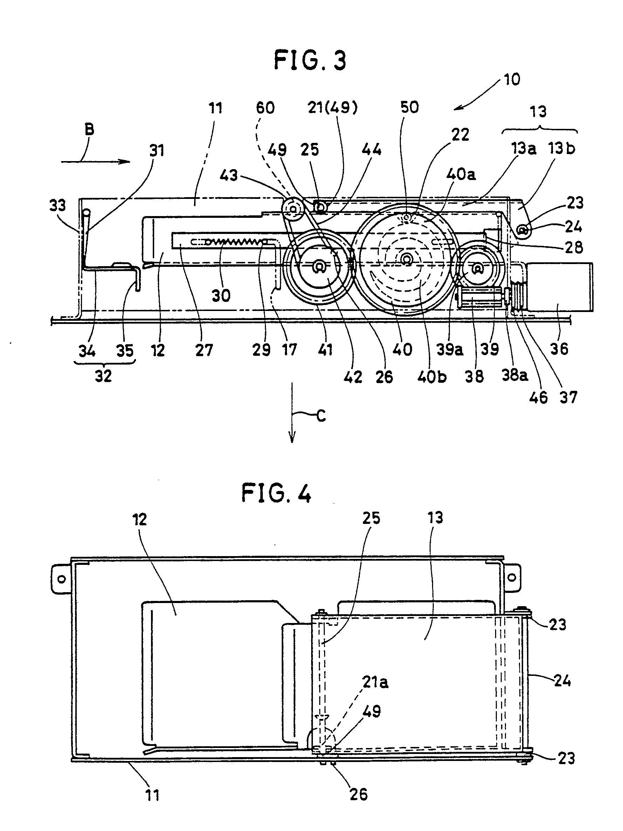

Fig. 3 is a side view of a cassette loading system 10 according to the first preferred embodiment of the present invention. Fig. 4 is a plan view of the system 10.

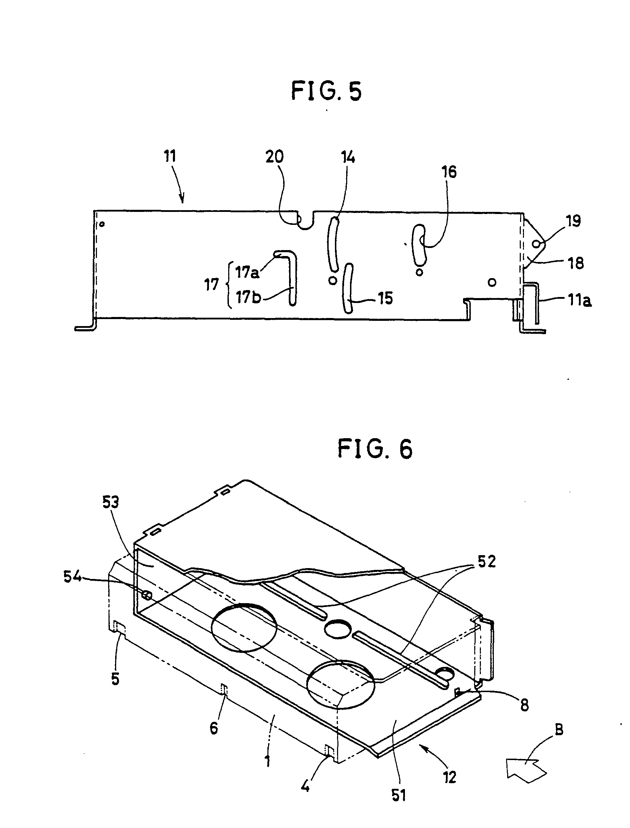

The system 10 comprises a frame 11 shown by a chain line, a cassette holder 12 stored inside the frame 11, and a holder arm 13 positioned above the cassette holder 12. The frame 11 is provided with elongate arcuate apertures 14, 15, and 16, and an L-shaped guide 17, as viewed in Fig. 5. The elongate aperture 14 and 16 extend widthwise of the frame 11, and are arranged so that their curvatures are in the same sense. The elongate aperture 15 extends substantially directly across the width of the frame 11. A projection 18 is positioned at the right side of the frame 11 and has an axis opening 19. A notch 20 opened upward is provided at the upper side of the frame 11.

The holder arm 13 contains a flat portion 13a and a curved portion 13b. An insertion aperture 21 is formed in the flat portion 13a. Another insertion aperture 23 is formed in the curved portion 13b. A pin 50 is provided on the holder arm 13, and is inserted into the elongated aperture 16 of the frame 11.

The holder arm 13 is rotatable around an axis horizontal to the frame 11. A support axis 24 is inserted into the insertion aperture 23 of the holder arm 13 and the axis aperture 19 of frame 11, so that the holder arm 13 is rotatable around the support axis 24 within the frame 11.

In the cassette holder 12, an insertion aperture 49 is provided at a position opposed to the insertion aperture 21 of the holder arm 13. A support axis 25 is inserted through the insertion aperture 21 of the holder arm 13, the insertion aperture 49 of the cassette holder 12, and the elongate aperture 14 of the frame 11. A projection 26 is provided on the cassette holder 12 for insertion through the elongate aperture 15 of the frame 11. Since the cassette holder 12 is fixed to the holder arm 13 by the support axis 25, it can be raised and lowered by the rotation of the holder arm 13. The cassette holder 12 is attached to the frame 11 by the support axis 25 and the projection 26 so that it can be raised and lowered whilst being supported in a horizontal position. As is apparent from Fig. 4, the holder arm 13 is maintained by the support axes 25 and 24, so that this horizontal condition of the cassette holder 12 can be maintained.

A cassette detection lever 27 is provided at the side of the cassette holder 12 and extends in cassette insertion direction B. The cassette detection lever 27 is formed at its tip portion (the rightmost portion in Fig. 3), with an inwardly projecting cassette detection member 28. On the outer face of the cassette detection lever 27 there is provided a projection 29 which projects through an L-shaped guide 17 of the frame 11. Outwardly of the cassette detection lever 27 is positioned a spring 30. One end of the spring 30 is fixed to the side of the cassette holder 12 while the other end is fixed to the projection 29. Therefore, the cassette detection lever 27 is biassed by the spring 30 in a direction opposite to direction B of cassette insertion. A cassette inlet 33 in the left side of the frame 11 is provided with a freely openable lid 31. Under the lid 31, an L-shaped cassette guide 32 is provided comprising a horizontal portion 34 and a vertical portion 35. As will be described below, the cassette 1 is inserted through the cassette inlet 33, so that it is guided to the horizontal portion 34 of the guide 32 to be positioned in the cassette holder 12. When the cassette 1 reaches the limit of its horizontal movement in the cassette holder 12, the cassette holder 12 is lowered in such a manner that its rear side (the leftmost portion of Fig. 3) is guided by the vertical portion of the guide 32.

A motor 36 is mounted on an attachment portion IIa of the frame 11. A belt 46 is wound over a rotation axis 37 of the motor 36 and a rotation axis 38a of a worm 38. The worm 38 is engageable with a worm wheel 39 coaxially fixed to a spur wheel 39a. The spur wheel 39a is engaged with a cam wheel 40 with a cam face. The cam wheel 40 is engaged with a gear 41 provided coaxially with a pulley 42. A belt 44 is entrapped over the pulley 42 and a pulley 43 engaged in the notch 20 of the frame 11. The pulley 43 is provided coaxially with cassette forwarding rollers 60. The motor 36 is driven to rotate the pulley 43 through the pulley 42 and the belt 44, so that the rollers 60 are rotated to forward the cassette 1.

The cam wheel 40 includes a circular cam surface 40a and a spiral cam surface 40b, interconnected. The pin 50 of the holder arm 13 acts as a follower travelling along the cam surfaces 40a and 40b.

Fig. 6 is a perspective view, partially broken, of the cassette holder 12. In the bottom surface 51 of the cassette holder 12, a projection guide 52 is engageable in the preventing groove 8 formed in the cassette 1 to prevent erroneous insertion of the cassette. Since the projection guide 52 is elongated in the insertion direction B, it can be longitudinally engaged with the prevention groove 8. Moreover, when the front cover is down, the inserted cassette 1 can be adequately supported in its horizontal condition. A projection 54 is positioned on the rear surface 53 of the cassette holder 12. When the cassette 1 is inserted as shown in chain line, the release projection 7 for releasing the locking of the cover 3 is pushed by the projection 54 thereby to open the cover 3.

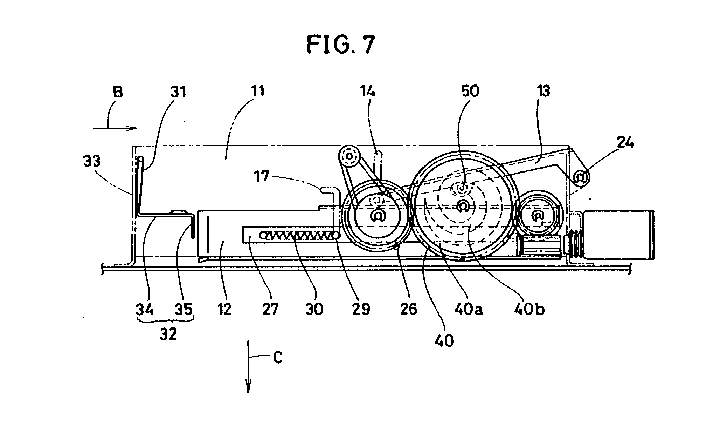

Fig. 7 is a side view of the cassette loading system 10 storing the cassette. When the cassette 1 is not inserted as shown in Fig. 3, the insertion of the cassette 1 into the cassette recorder enables a cassette detection switch (not shown) to actuate the motor 36, so that its rotary drive force can be forwarded to the pulley 43 via the belt 44 through the worm 38, the worm wheel 39, the wheel 40 and 41, and the pulley 42 to rotate the roller 60. By the rotation of the roller 60, the cassette 1 is forwarded in the arrow direction B. At the same time, the projection 29 of the cassette detection lever 27 is positioned at the horizontal portion 17a on the L-shaped guide 17, so that the cassette holder 12 is prevented from being lowered. Therefore, although the pin 50 of the holder arm 13 is positioned at the outermost portion of the spiral cam surface 40b in the wheel 40, namely, the circular cam surface 40a, it can be prevented from entering the inner portion of the spiral cam surface 40b. When the cassette 1 is forwarded within the cassette holder 12, the cassette detection member 28 of the cassette detection lever 27 is forced by the cassette 1, so that the cassette detection lever 27 is shifted in the arrow direction B against the force of the spring 30.

Thus, according to the first preferred embodiment of the present invention, when the cassette detection lever 27 shifts, the projection 29 of the cassette detection lever 27 is displaced from the horizontal portion 17a of the L-shaped groove 17 of the frame 11 to the end of such horizontal portion which leads into the vertical portion 17b, so that the cassette holder 12 can be lowered. The pin 50 of the holder arm 13 can then enter the inside of the spiral cam surface 40b while the cam wheel 40 continues to be rotated. When the pin 50 and the spiral cam 40b are engaged with each other, the holder arm 13 becomes rotatable around the support axis 24, so that the cassette holder 12 becomes lowered in arrow direction C toward the cassette storing completion position. The stored cassette can be ejected from the recorder in the reverse manner as stated above.

Attention is now directed to a second preferred embodiment of the present invention wherein a supporting mechanism is improved so as to reduce the rotation load imposed upon a storing roller when the cassette is stored within the cassette holder.

The cassette loading system comprises a cassette elevator for raising and lowering the cassette, an inhibiting mechanism for inhibiting the lowering of the cassette elevator, a releasing mechanism for releasing the inhibition upon loading the cassette, and a correlation mechanism responsive to the power energy of a power source for correlating the release mechanism and the preventing mechanism.

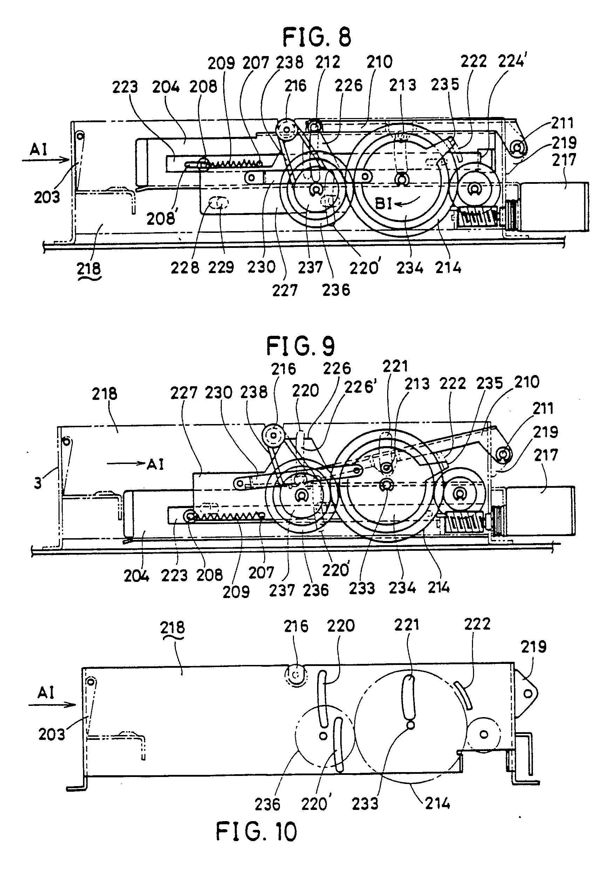

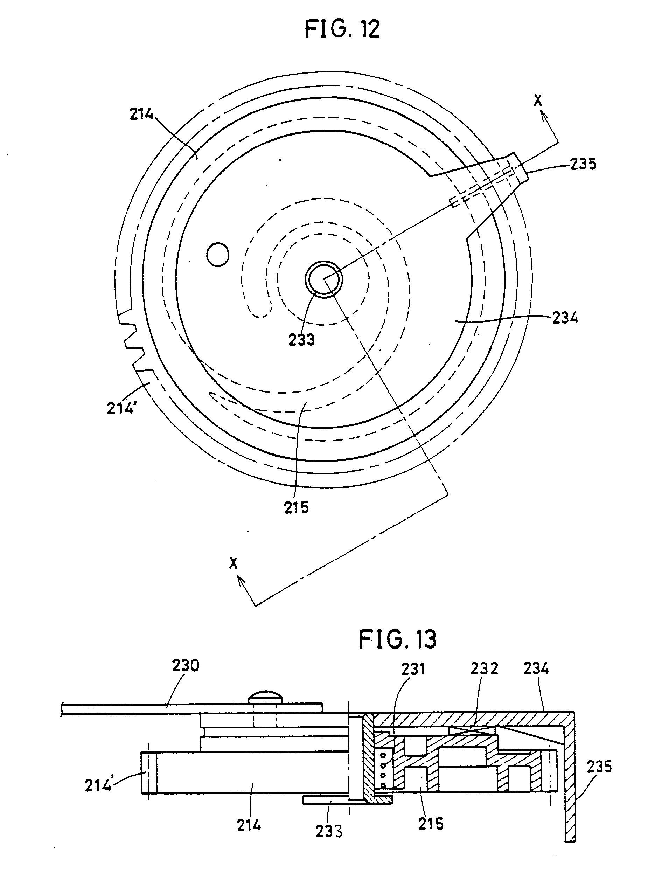

With reference to Figs. 8 through 16, in the cassette elevator, a frame 218 is provided with a cassette inlet 203 at one end and an attachment member 219 at the other end, an end of an arm 210 being pivotally coupled to the attachment member 219. A roller 213 which is rotatably mounted to the middle of the arm 210 is positioned so as to move along an arcuate hole 221 in front of a frame 218 around the pivotal axis 211, at the tip of the arm 40, the upper centre of the cassette holder 204 is pivotally supported by a pivotal axis 212. The outer end of the pivotal axis 212 and a pin 225 positioned on a lower part of the holder 204 project through respective arcuate apertures 220, 220' formed in front of the frame 218 so as to maintain the cassette holder 204 horizontal with respect to the frame 218 while it can be raised and lowered according to the seesaw operation of the arm 210.

To inhibit vertical movement of the cassette a stop plate 227 is mounted in front of the frame 218, as being slidable to the right and left, by a pair of guide pins 229 projecting from the frame 218 and corresponding elongate apertures 228 on the stop plate 227. At the right upper side of the stop plate 227, a stop projection member 226 and a release cut-away slot 226' are formed. The stop projection member 226 is engaged by the outer side of the pivotal axis 212 for preventing its downward movement. When the stop plate 227 is moved in the cassette insertion direction, the pivotal axis 212 is released from this downward prevented state.

As the release mechanism, a slidable bar 223 mounted in front of the cassette holder 204, is provided with both a bent member 224' projecting into the holder 204 through an opening 204' formed at the right side and a stopping member 224 bent at the right end upward and outward. The guide bar 223 is slidably mounted by guide bar elements 208 projected from the front surface of the holder 204 right and left, and corresponding elongate holes 208' formed in the slidable guide bar 223. A spring 209 is provided between a projected pin 207 at the left side of the guide bar 223 and the guide bar element 208, so that the slidable guide bar 223 is permanently biassed in the cassette loading-out direction.

Between the release mechanism and the inhibiting mechanism, a correlation mechanism is provided which is responsive to the power application from a power source for correlating both mechanisms. As the correlation mechanism, a cam disk 214 is provided for rotating in response to a motor 217 positioned at the right end via an appropriate transmission means. A cylinder 233 is provided for pivotally supporting the cam disk 214 and a friction transmission disk 234 in front of the frame 208. The friction transmission disk 234 is formed with a hook member 235 bent toward the frame 218 and projecting through the arcuate hole 222 positioned at the right end of the frame 218 and resting on the top surface of the stopping member 224 formed on the slidable guide bar 223. A bar 230 extends between the transmission disk 234 and the stop plate 227. When the transmission disk 234 is rotated through a permitted length defined by the arcuate hole 222, the rotation movement is transmitted to the stop plate 227. On the cam disk 214 fixed coaxially adjacent the transmission disk 234, a spiral groove 215 is formed on the surface facing the frame 218 so that it is engaged with the roller 213 formed on the seesaw arm 210 and projecting outward through the arcuate hole 221 of the frame 218. Between the outer surface of the cylinder 233 and the cam disk 214, a spiral spring 231 is provided for urging the disks 214 and 234 into frictional engagement through a friction member 232 disposed between the cam disk 214 and the transmission disk 234. Through engagement between a transmission wheel 236' provided on the front surface of the frame 218 with a gearing 214' formed at the periphery of the cam disk 214, a cassette take-in roller 216 is driven via the pulley 237 and the belt 238. The roller 216 is rotatably mounted on the top of the frame 218.

In operation, when the cassette is not loaded in the cassette holder 204, the slidable bar 223 is urged toward the cassette inlet 203 by the spring 209. The hook member 235 of the transmission disk 234 rests against the top of the stopping member 224 to stop the rotation of the transmission disk 234, and the stop plate 227 is in its limit position closest to the cassette inlet 203. The outer end of the pivotal axis 212 of the seesaw arm 210 is engaged with the top of the stop member 226 of the stop plate 227. When the cassette 1 is inserted through the inlet 203 of the frame 218 in direction AI, the power switch (not shown) of the motor 217 is set to drive it. Via the transmission mechanism comprising the belt, the worm speed-reduction means, the wheel member, the cam disk 214 is rotated at a constant speed in a predetermined direction (arrow BI direction). Its rotation enables the cassette take-in roller 216 on the top of the frame 218 to be rotated via the wheel 214' on the cam disk 214, the wheel 236, the pulley 237, and the belt 238.

The rotation of the roller 216 causes the cassette to be taken into the holder 204. When the cassette is positioned in contact with the roller 216, the roller 216 subsequently forwards the cassette in the frame 218 with the roller rotating in frictional engagement with the top of the cassette. Eventually, the tip of the cassette contacts with the bent member 224' of the slidable bar 223, and moves the slidable bar 223 in arrow direction AI against the spring 209. Fig. 9 shows this condition.

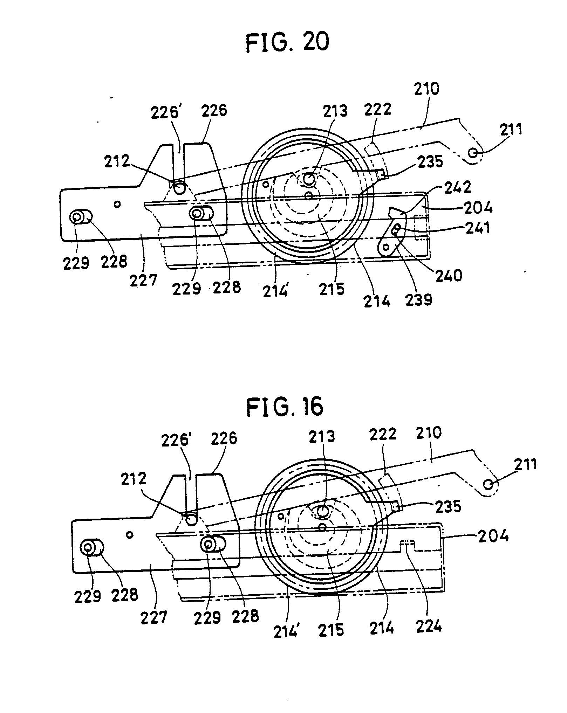

Therefore, the stopping member 224 is moved. Until then, this member prevents rotation of the hook member 235 of the transmission disk 234. Upon release of this prevention of rotation of the hook member 235, the transmission disk 234 is rotated by the rotation force applied by the cam disk 214 in accordance with the power from the motor 217, through a permissible distance defined by the arcuate hole 222. The stop plate 227 is moved by the bar 30 by an amount corresponding to the permitted rotation of the transmission disk 234 (arrow direction CI of Fig. 14). The engagement between the pivotal axis 212 of the seesaw arm 210 and the projected stop member 226 is thereupon released.

Therefore, the pivotal axis 212 can be lowered in the cut-away slot 226'. Before this happens, the projected stop member 226 supports the weight of the cassette, the holder, and the arm etc. In response to the release operation, the seesaw arm 210 starts to lower. When it has lowered slightly, the roller 213 positioned at the middle of the arm 210 comes into engagement with the starting point of the spiral groove 215 of the rotating cam disk 214. The spiral groove 215 acts to lower the roller 213 so that the cassette holder 204 is positioned at a desired position.

The cam disk 214 is continuously rotated by the motor 217. While the transmission disk 234 is stopped by the stopping member 224 of the slidable bar 223, it is slipped by the friction member 232 positioned between the cam disk 214 and the transmission disk 234, so that continuous rotation of the cam disk 214 can be prevented.

As stated above, in the second preferred embodiment of the present invention, the stop operation of the continuous mechanism can be released and further the power energy of the motor 217 can be transmitted to the stop plate 227 to permit the lowering of the cassette holder 204, so that the lowering of the cassette holder 204 is accelerated.

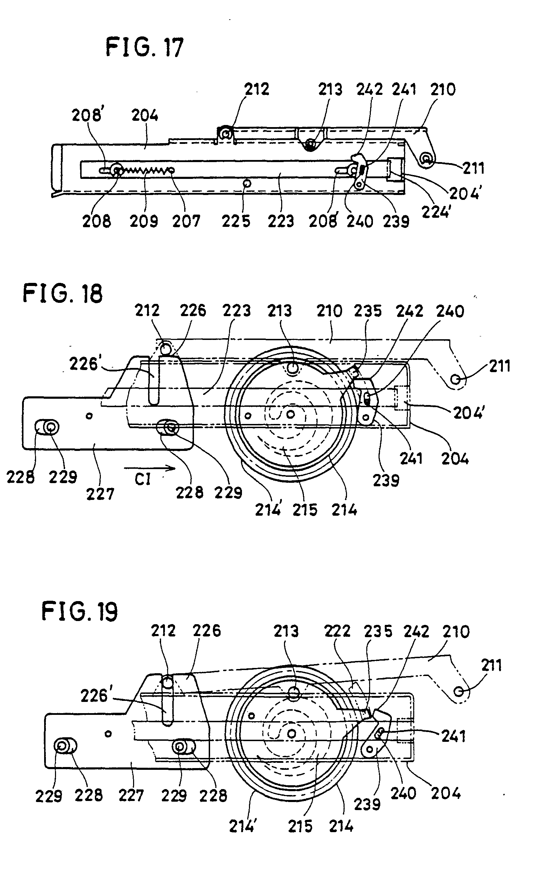

It may be possible that the stopping member 224 of the slidable bar 223 can be formed as shown in Fig. 17. Figs. 18 through 20 show the operation with this modified form of stopping member.

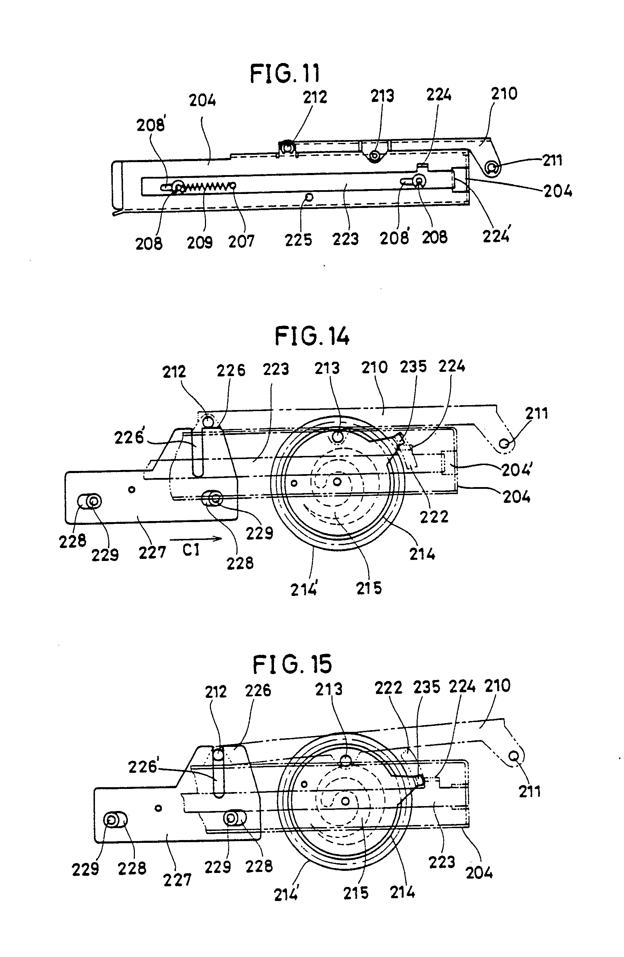

A lock lever 239 has an upper stop surface 242 and is pivoted at its base to the cassette holder 204. A pin 241 fixed to the slidable bar 223 projects through an elongate hole 240 formed at the centre of the lock lever 239. In the absence of a cassette, the stop surface 242 of the lock lever 239 engages with the bent hook member 235 of the transmission disk 234 to stop the rotation of the transmission disk 234. Upon insertion of a cassette, the movement of the slidable bar 223 causes the lock lever 239 to be rotated, so that the locking between the stop surface 242 and the bent hook member 235 is released. Thus, the release between the lock lever 239 and the hook member 235 of the transmission disk 234 becomes very smooth. Since the movement of the stop surface 242 is not equal to the movement of the slidable bar 223, the release accuracy can be very much improved. Otherwise, the operation of the arrangement of Figs. 17-20 corresponds to the operation described above with reference to Figs. 11, 14-16.

Further attention is directed to a third preferred embodiment of the present invention in which while a spiral cam disk is rotated through a predetermined angle, first stop means is provided for stopping the vertical movement of the cassette holder and second stop means is provided for stopping the releasing operation of the release means releasing the stop operation of the first stop means in synchronisation with the detection of the horizontal operation end.

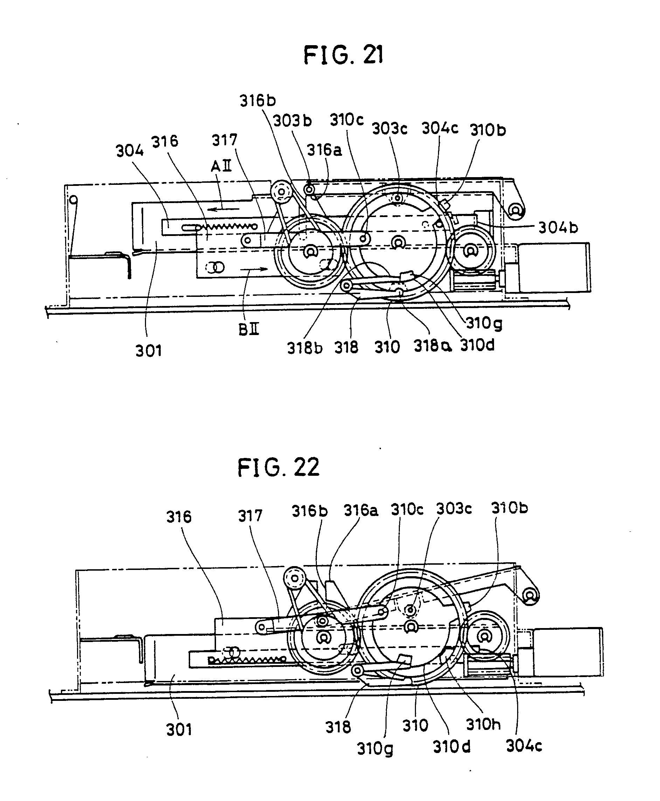

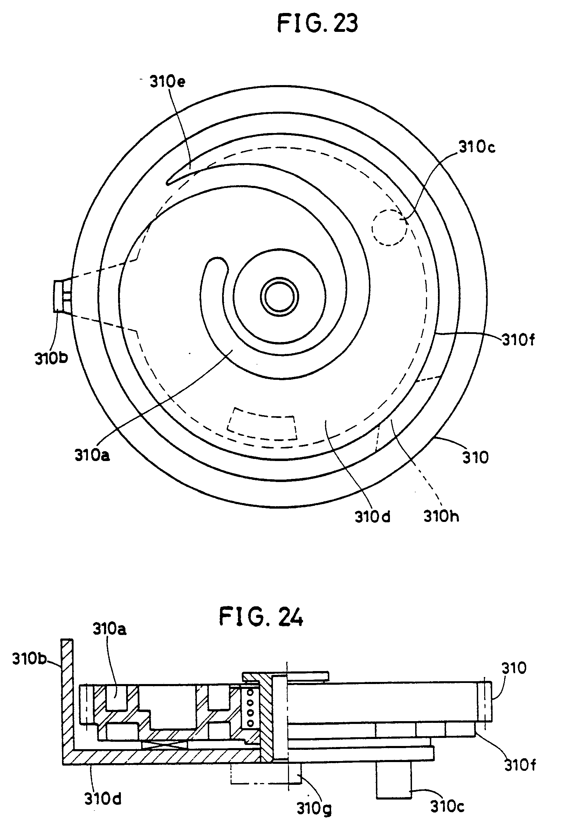

Fig. 21 is a side view showing the cassette loading system according to the third preferred embodiment of the present invention with no cassette loaded and stored therein. Fig. 22 is a side view of the cassette loading system of Fig. 21 with a cassette stored. Fig. 23 is a rear view of a cam gear 310. Fig. 24 is a partially sectioned side view.

The cam gear 310 is provided with a spiral cam groove in its circular side. A roller 303c of a holder arm 303 faces the cam groove. A stop plate 316 with a U-shaped slot 316b is provided for preventing the engagement between the roller 303c and the spiral cam groove. The cam gear 310 is provided with a clutch means so that an engagement member 310b of the clutch means is engaged with a lock claw 304c of a cassette detection lever 304.

When the cassette (not shown) is loaded in, the cassette detection lever 304 is horizontally moved in a direction opposite to arrow direction AII. When the cassette detection lever 304 is positioned at the position as shown in Fig. 22, the cassette detection member 304b of the cassette detection lever 304 is pressed by the cassette, so that it is moved in the reverse direction to arrow direction AII. The lock claw 304c is released from the engagement member 310b of the clutch means. A clutch disk 210d of the clutch means thereupon starts to rotate, so that the connection lever 317 moves the stop plate 316 in arrow direction BII. An axis 303b is released from the stop member 316b of the stop plate 316, and it enters the U-shaped slot 316. The holder arm 303 is rotated downwardly, and the roller 303c enters the spiral cam 310a. The cassette holder 301 is thus lowered as shown in Fig. 22 to load the cassette.

The third preferred embodiment is characterised in that the rear side of the cam gear 310 is formed with spiral cam 310a and that the periphery of the front surface of the cam gear 310 is provided with an operation cam 310f. The spiral cam 310a is provided with an acute-angle portion 310e at the point between the outer groove and the spiral groove. A concave portion 310h is formed in the operation cam 310f. The cam gear 310 and the operation gear 310f are integrally combined. The front side of these elements are provided with a clutch disk 310d. The clutch disk 310d, is formed with an arm 310b with a rearwardly projecting right-bent tip, a forwardly projecting stopper 310g, and a pin 310c engaged with a lever 317.

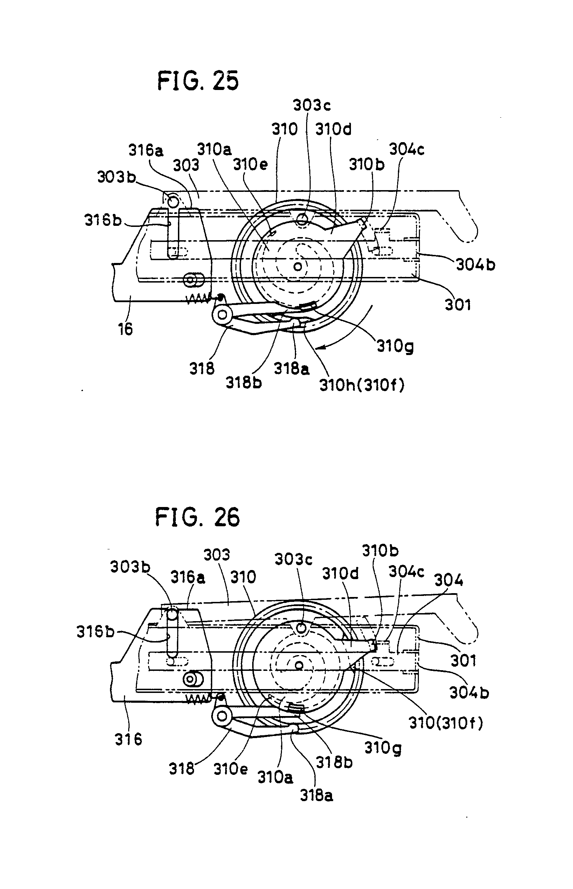

The lock lever 318 comprises a cam follower 318a and a lock member 318b, and is spring biased to urge the cam follower 318a into engagement with the operation cam 310f. When the lock lever 318 is positioned at such a rotation phase (the condition of Fig. 25) that the roller 303c can come into contact with the acute-angle portion 310e of the cam gear 310, it enables the stopper 310g provided on the clutch disk 310d to be locked. While it is the alternative rotation phase (the condition of Fig. 26), it releases the locking of the stopper 310g.

In operation, before the cassette is loaded and stored and, in addition, while the acute-angle portion 310e of the cam is not in a rotation phase of being in contact with the roller 303c, the cam follower 318a of the lock lever 318 is in contact with the outer surface of the operation cam 310f provided on the cam gear 310. The lock member 318b of the lock lever 318 is released from the stopper 310g.

When the cassette is loaded so that cassette holder 301 is to be lowered and the acute-angle portion 310e of the cam is in a rotation phase of possibly being engaged with the roller 303c, the cam follower 318a of the lock lever 318 is inserted into concave portion 310h of the operation cam 310f provided in the cam gear 310, so that the lock member 318b of the lock lever 318 locks the stopper 310g of the clutch disk 310d. The rotation of the clutch disk 310d is stopped. The connection lever 317 cannot move the stop plate 316, so that the roller 303c is not lowered. The acute-angle portion 310e of the cam is not in contact with roller 303c. As the cam gear 310 rotates, the cam follower 318a of the lock lever 318 comes into contact with the outer periphery of the operation cam 310f, so that the lock member 318b of the lock lever 318 is released from the stopper 310g. The clutch disk 310d is started to be rotated and the roller 303c can be engaged with the spiral cam 310a. In this condition, the lock lever 318 rests against the stopper 310g, so that the stopper 310g is prevented from being locked.

As stated above, the cassette loading system of the cassette recorder comprises the cassette holder 301 for supporting the cassette, the forwarding roller 314 for forwarding the cassette substantially horizontally, the cassette detection lever for detecting completion of the horizontal travel of the cassette, the holder arm 303 for vertically moving the cassette holder, comprising the roller 303c engaged with the spiral cam 310a, the stop plate 316 for preventing the vertical downward movement of the cassette holder, the connection lever responsive to the drive power of the clutch mechanism from the cam gear 310 for releasing the stop operation of the stop plate 316, and the cassette detection lever lock claw 304c for preventing release of the locking of the stop plate 316 until the completion of horizontal travel of the cassette. According to the gist of the third preferred embodiment of the present invention, there are provided the lock lever 318 and the operation cam 310f on the cam gear 310. The lock lever 318 is provided for stopping the release by the connection lever 317 by locking the clutch disk 310d when the spiral cam 310a is at a predetermined rotational phase. The operation cam 310f is provided to operate the lock lever 318. Even when the roller 303c is slightly down, the roller 303c can be transferred smoothly onto the spiral portion of the cam.

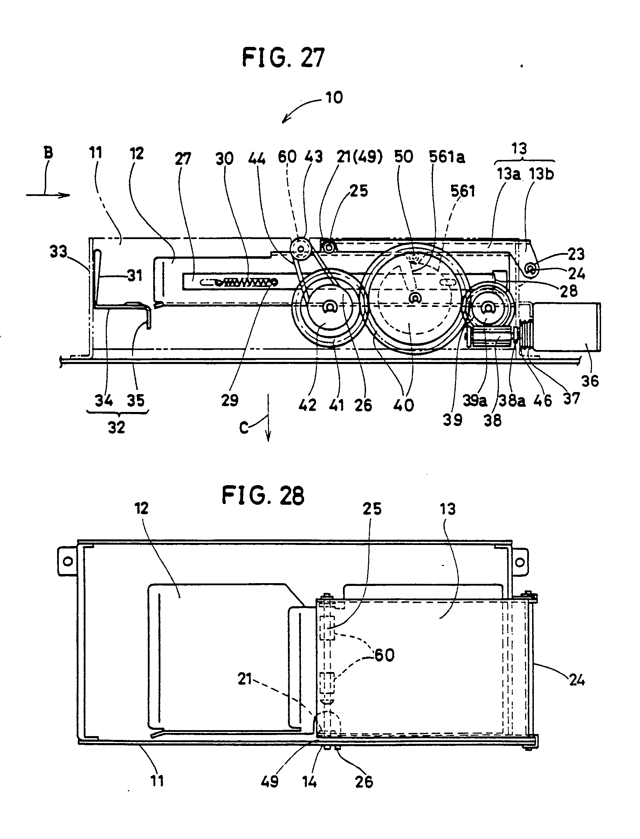

Still further attention is now directed to a fourth preferred embodiment of the present invention where the load of a cassette guiding roller can be reduced to change over smoothly from the horizontal movement to the vertical movement of the cassette. Figs. 27 to 34 show the fourth preferred embodiment of the present invention. Those elements of Figs. 27 to 34 corresponding to elements of Figs. 3 through 7 are indicated by like numerals.

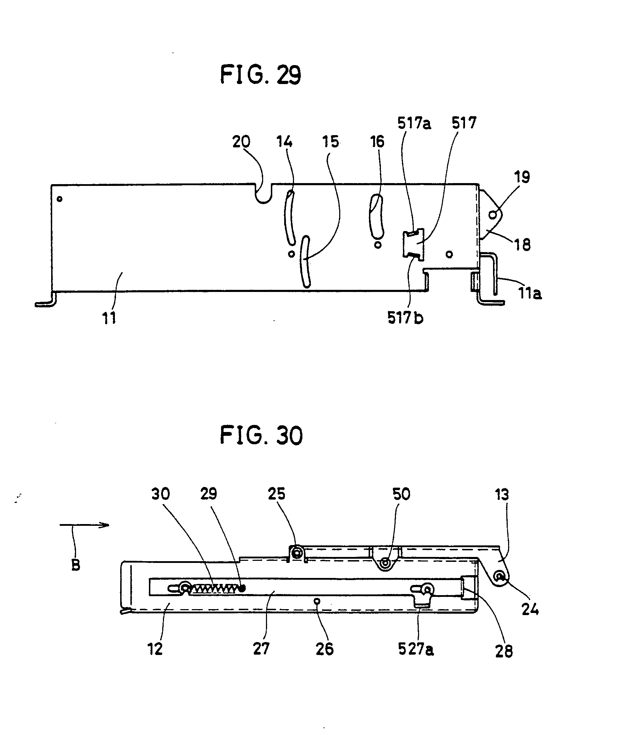

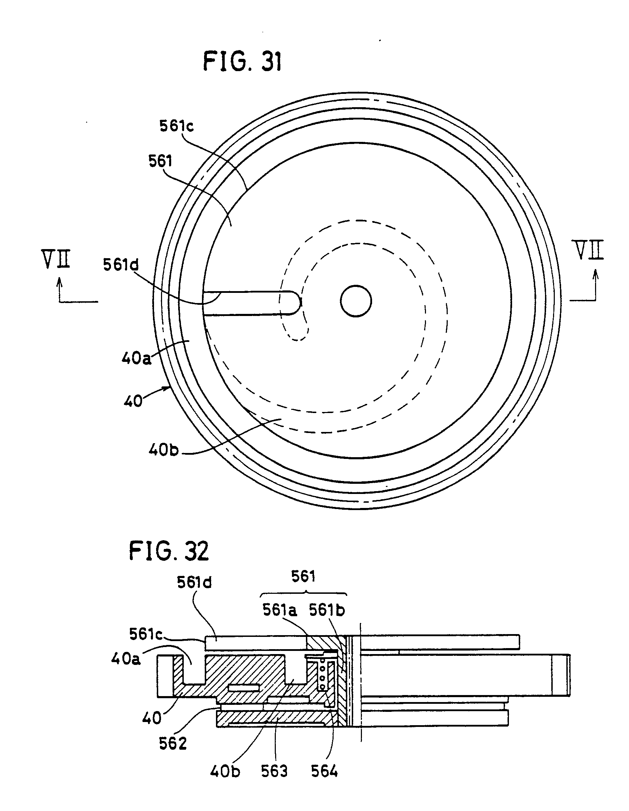

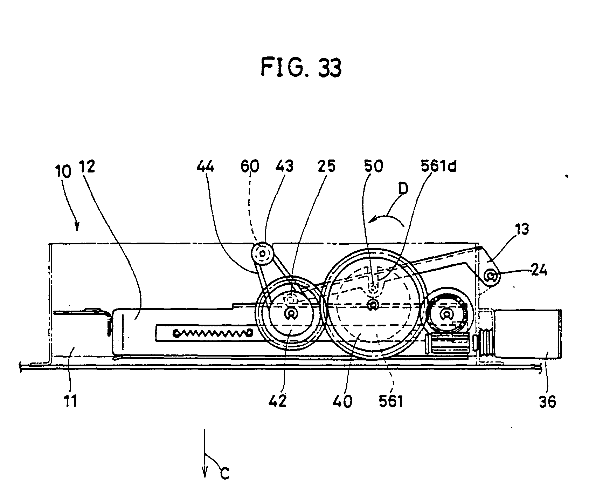

Fig. 27 is a side view of the cassette loading system of the fourth preferred embodiment of the present invention. Fig. 28 shows a plan view of the system of Fig. 27. As shown in Fig. 29, to the right of the elongated aperture 16, a stop element 517 is provided. At the top side of the stop element 517, there is provided a stop portion 517a extending right to the frame 11. At the other side of the stop element 517, a stop element 517b is provided in parallel with the stop element 517a. As shown in Fig. 30, at the right end of the cassette detection lever 27, a lock means 527a is provided for causing a stop means not to release the locking till completion of horizontal travel of the cassette, the stop means preventing the holder arm 13 from being lowered. A cam wheel 40 is provided with circular and spiral cam surfaces 40a and 40b interconnected (as shown in Fig. 31). In Figs. 27 and 33, the cam surfaces 40a and 40b are omitted. The pin 50 of the holder arm 13 can move as the follower along the cam surfaces 40a and 40b. The cam wheel 40 is provided with a stop disk 561 to prevent the down movement of the holder arm 13.

Fig 31 shows an enlarged view of the cam wheel 40. Fig. 32 is a sectional view of the cam wheel 40 taken along the line of VII-VII of Fig. 31. Under the cam wheel 40, a slip plate 563 is provided. Above the cam wheel 40, a stop plate 561 is provided. The stop plate 561, the cam wheel 40 and the slip plate 563 are coaxial. The stop plate 561 includes a disk-shaped portion 561a and a hub 561b projecting axially from the disk portion 561a. The cam wheel 40 is loosely fitted onto the hub 561b. A U-shaped slot 561d is formed in the stop plate 561 extending axially from the outermost periphery 561c towards it centre. A projection 562 fixed to the slip plate 563 projects towards the cam wheel 40. The cam wheel 40 is made of a high friction material. The cam wheel 40 is biassed axially toward the projection 562 by a spring 564. The cam wheel 40 is coupled with the projected portion 561b of the stop element 561. Thus, when the cam wheel 40 is rotated, a rotational friction force is applied to the projected portion 562, so that a predetermined rotation torque is transferred to the slip plate 563.

Fig. 33 shows a side view of the cassette loading system 10 when the cassette holder 12 is lowered in response to the loading of the cassette in the cassette holder 12. When the cassette is inserted through the cassette inlet 33, the motor 36 is rotated, so that the forwarding roller 60 is rotated in arrow direction D. The cassette is thereby horizontally driven into the cassette holder 12. While the cassette detection lever 27 is positioned as shown in Fig. 27, the projected portion 50 of the holder arm 13 is in contact with the outer periphery 561c of the stop plate 561, so that it is prevented from entering the spiral cam surface 40b. As the cassette is fully inserted into the cassette holder 12, the cassette detection lever 27 is moved. The locking of the stop plate 561 stopping the movement of the holder arm 13 is released, as will be described below, so that the stop plate 561 is rotated in a direction opposite to the direction D to a position as shown in Fig. 33. In this position, the projection portion 50 of the holder arm 13 comes into engagement with spiral cam surface 40b. Therefore, the holder arm 13 is started to be lowered in arrow direction C by the guide member 32. Eventually, the loading of the cassette is completed as shown in Fig. 33.

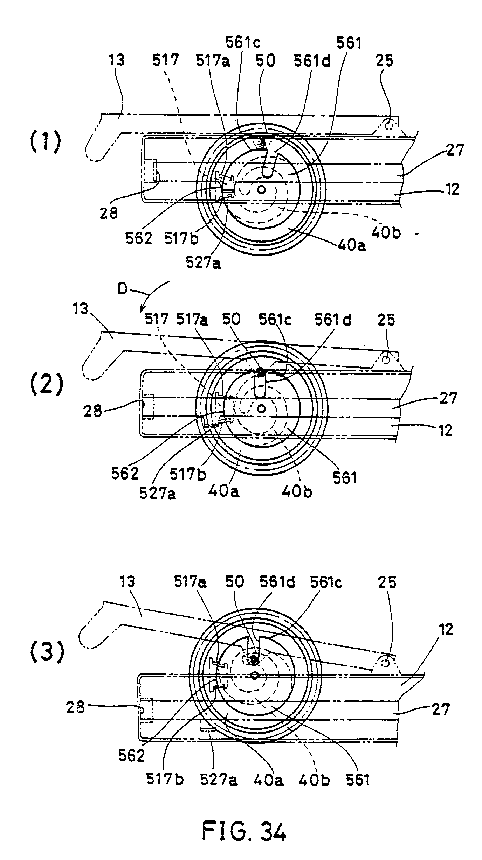

Fig. 34 is a view for explaining the releasing condition of the stop means stopping the lowering movement of the holder arm 13. The projection 562 on the slip plate 563 is engaged with the stop portion 517 of the frame 11. The slip plate can be rotated between positions defined by the stop portions 517a and 517b. When the cassette is not loaded as shown in Fig. 34(1), the projection 562 is in contact with the lock member 527a of the cassette detection lever 27, so that the rotation of the stop plate 561 is prevented. In this case, as shown in Fig. 34(1), the stop plate 561 is such that the projected portion 50 fixed on the holder arm 13 is not inserted into the U-shaped slot 561d. When the cassette 1 is loaded so that the cassette detection lever 27 is moved, as shown in Fig. 34(2), the lock member 527a of the cassette detection lever 27 is shifted, so that it is displaced from the projection 562. The rotation of the stop plate 561 in the direction D is permitted. When it is rotated in the direction D, it becomes in contact with the stop portion 517b of the frame 11 so that the rotation of the stop plate 561 is stopped at a position in which the U-shaped slot 561d of the stop plate 561 can receive the projected portion 50 of the holder arm 13. Meanwhile, the cam wheel 40 continues to rotate. Thus, the spiral cam surface 40b also continues to rotate so that the inner movement of the projected portion 50 along the spiral cam surface is permitted as shown in Fig. 34(2). Under this condition, as the cam wheel 40 rotates, the projected portion 50 of the holder arm 13 is advanced inwardly along the U-shaped slot 561d. Therefore, the cassette holder 12 can be lowered while being kept horizontal. When the projected portion 50 reaches the bottom i.e. the inner end of the U-shaped slot 561d, as shown in Fig. 34(3), the cassette loading operation is positioned as shown in Fig. 34(3).

The cassette can be taken out in the reverse manner to that described above. In such a case, when rotary drive is applied to the stop plate 561 in reverse to arrow direction D in Fig. 34(2), the rotation of the stop plate 561 is prevented by the projection portion 50 so long as this projected portion 50 is within the U-shaped slot 561d. When the projected portion 50 exits from the U-shaped slot 561d, the stop plate 561 can be rotated in the reverse direction to arrow D. When the projection 562 comes into contact with the stop member 517a of the frame 11, the stop plate 561 is stopped. The cassette is then moved in the outward direction by the guide roller 60, so that the cassette detection lever 27 is returned by the force of the spring 30 to its position as shown in Fig. 34(1).

Further attention is now directed to a fifth preferred embodiment of the present invention where a slight movement of a roller in response to the cassette insertion can be magnified by a pair of operation members provided with a bearing collar and detected by a sensor. The roller can be rotated immediately in response to the contact of the cassette to the roller.

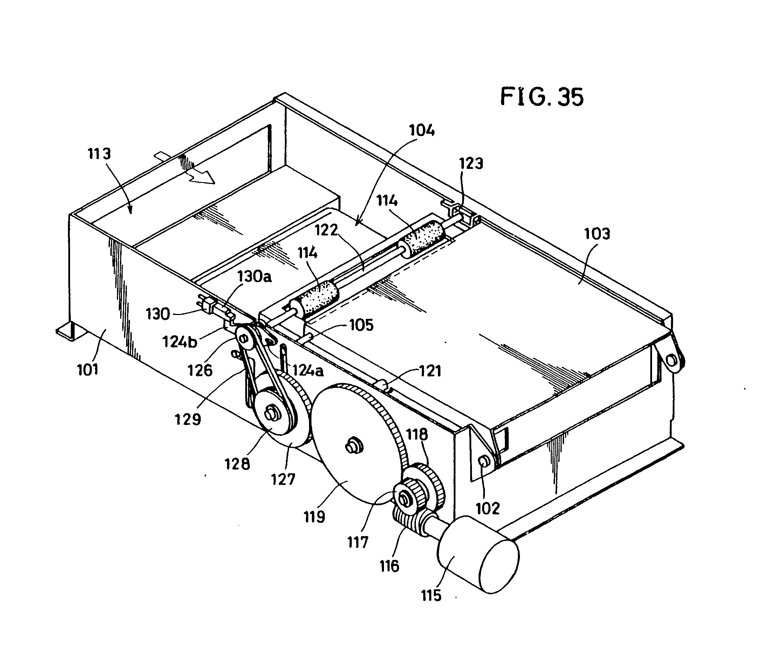

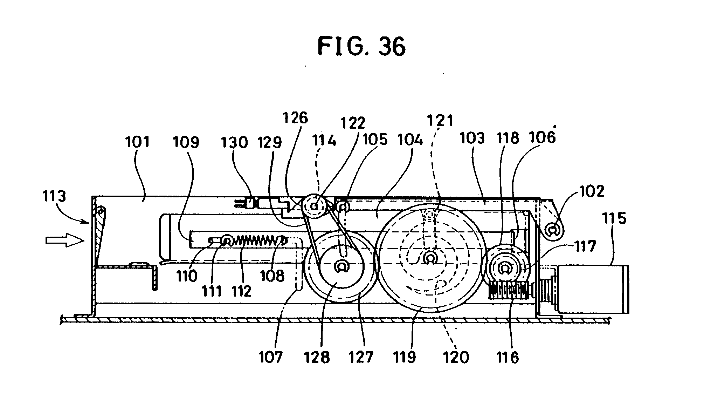

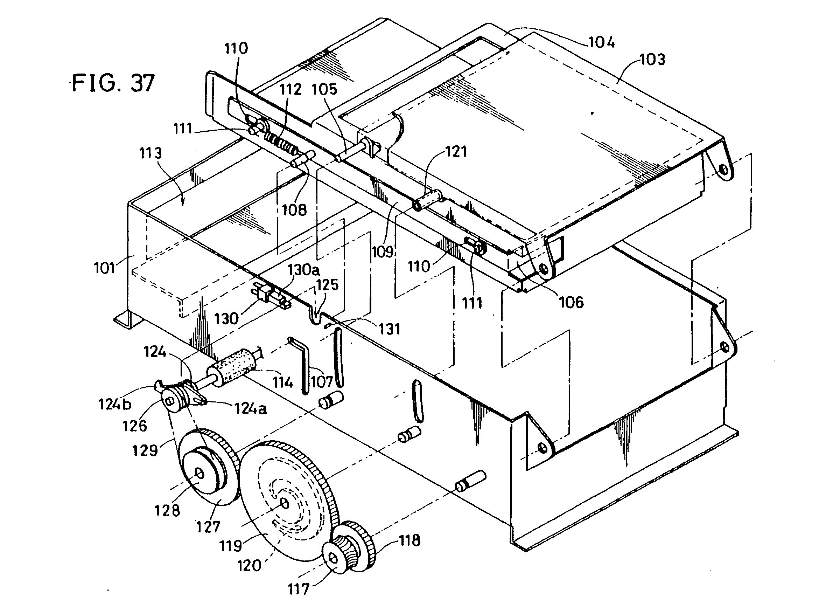

With reference to Figs. 35 through 41, the cassette loading system of the fifth preferred embodiment is characterised in that a seesaw arm 103 is pivotally supported by a pivotal axis 102 at the end of a frame 101. The tip of the arm 103 is pivotally connected to the upper front centre of a cassette holder 104 by a horizontal pivotal axis 105. At the outer side surface of the cassette holder 104, a slidable lever 109 is positioned for horizontal forward and backward movement within predetermined limits by two elongated holes 110 and corresponding guide pins 111. An operating member 106 at the end of the lever 109 projects into the cassette holder 104. The slidable lever 109 is provided with a pin 8 inserted into an L-shaped aperture 107. A spring 112 is provided between the pin 108 and a guide pin 111 projecting from the side of the cassette holder 104. The slidable lever 109 is continuously biassed forwardly of the system (to the left in the drawing). The cassette holder 104 is maintained at the same height as that of a cassette inlet 113 provided at the front side of the frame 101 by the upper elongate portion of the L-shaped aperture 107 via the pin 108. When the cassette (not shown) is loaded into the system through the cassette inlet 103 in the arrow direction so that it is moved to a predetermined position of the cassette holder 104, it is forcibly pressed in the arrow direction by a driven roller 114 mounted to the frame 101. At the end of the forced inward travel of the cassette, the cassette tip presses the operation member 106 against the bias of the spring 112 to move the slidable lever 109. The pin 108 on the slidable lever 109 is moved to the right end of the upper elongate portion of the L-shaped aperture 107 and, finally, to the starting point of the vertical portion, so that the lowering movement of the cassette holder 104 is permitted. It starts to lower slightly under its weight, the weight of the seesaw arm 103 and the inserted cassette.

At this time, a starting point of a spiral cam groove 120 is engaged with a roller 121 rotatably provided on the side of the seesaw arm 103. The spiral cam groove 120 is provided on the side of a gear 119. The gear 119 is rotated clockwise by the drive of a motor 115, a worm 116, a worm wheel 117, and a gear 118. The engagement of the roller 121 with the cam groove 120 enables the seesaw arm 103 to be forcibly pivoted downwardly. Accordingly, the cassette holder 104 is vertically lowered to a predetermined position.

As the axis support and driving mechanism of the cassette forward roller 114, an end of a rotation axis provided with the roller 114 is inserted into a bearing member 123 which is supported on the frame l01, is movable upward and downward, and is pressed downward. Adjacent the other end of the axis 122, a bearing collar 124 is provided having a circular periphery. The collar 124 is engaged in a recess 125 formed in the upper edge of the frame 101 in such a manner that it is movable up and down. A pulley 126 is fixed to the axis 122 outwardly of the collar 124. A pulley 128 is provided at the side of an idle gear 127 engaged with the gear 119 having the spiral cam groove 120. A rubber belt 129 is extended between the pulleys 126 and 128, so that the roller 114 is rotated counter-clockwise by the belt. The tension of the belt 129 causes the roller 114 to be biased toward the cassette holder 104.

When the bearing collar 124 is down to the bottom of the concave portion 125, the clearance between the bottom of the roller 114 and the cassette supporting surface of the cassette holder 104 is slightly less than the thickness of the cassette. A pair of operation members 124a and 124b project forwardly and rearwardly from the bearing collar 124. The tip of the operation member 124a has an elongate hole 132 in which is engaged a fixed pin 131 on the frame 101. The tip of the operation member 124b is in contact with the lower surface of a contact member 130a of a switch 130 provided on the outer side of the frame 101 to serve as a cassette loading detection sensor. After the stored cassette has contacted the roller 114, the bearing collar 124 is lifted slightly as the roller 114 is lifted while the belt extends slightly. The tip of the operation member 124b not engaged with the frame 101 is lifted to switch on the switch 130. The motor 115 is thereby powered and driven. The driving of the roller 114 enables the cassette to promptly be caught by the roller 114 and thereby forcibly moved. If the effective radii of the operation members 124a and 124b are assumed to be R1 and R2, respectively, the point of application of the operation member 124b is shifted (R1 + R2)/R1 times the upward shift distance of the bearing collar 124, so that a very slight movement of the roller enables the roller activation.

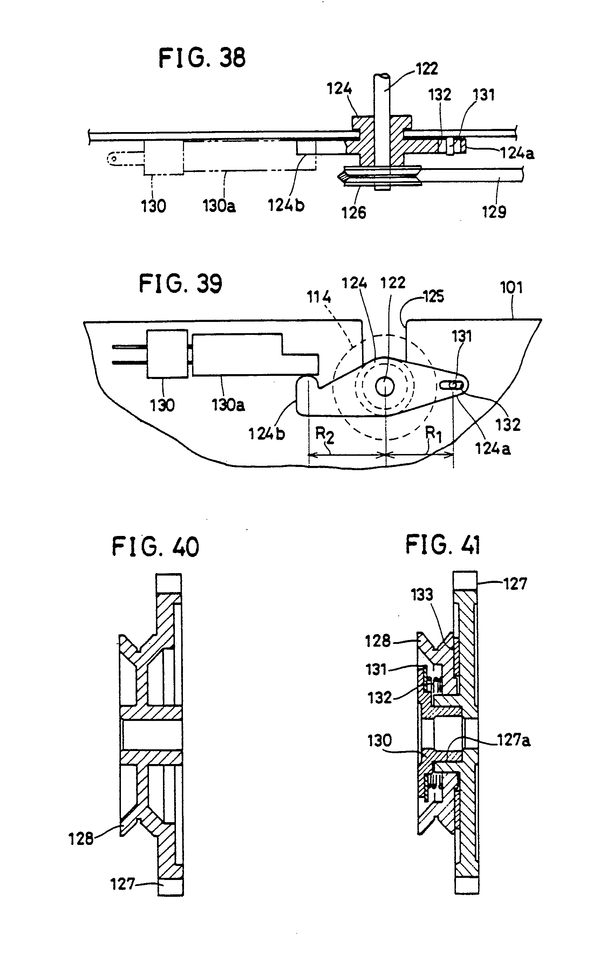

In the fifth preferred embodiment as stated above, the pulley 128 and the gear 127 are integrally combined as shown in Fig. 40. Alternatively, they can be formed as shown in Fig. 41. In the embodiment of Fig. 41, while the cassette movement is switched from the cassette horizontal-movement operation to the cassette vertical-movement operation, the still cassette cannot receive a horizontal-press force more than the force which is necessary to horizontally forward the cassette. The consumption of the components and abnormal power supply to the driving motor in forcibly forwarding the cassette can thus be prevented.

With reference to Fig. 41, the driving pulley 128 is not integral with the gear 127, but is rotatably mounted on the boss 127a of the gear 127, and is coupled with a boss 130 having a flange and attached to the boss 127a. Between a thrust collar 131 supported on the inner side of the flange of the boss 130 and the pulley 128, a spring 132 is provided to urge the pulley 128 toward the gear 127. A friction plate 133 is interposed between the pulley 128 and the gear 127. When the pulley 128 is loaded by a load more than a predetermined load, the pulley 128 and the gear 127 mutually slip. Thus, a torque limiter means is provided for limiting the stress which can be applied to the pulley 128. The torque limiter means could alternatively be interposed between the pulley 126 and the rotative axis 122. The rotative axis 122 can be driven with a gear means.

While only certain embodiments of the present invention have been described, it will be apparent to those skilled in the art that various changes and modifications may be made therein without departing from the scope of the present invention as claimed.

## Claims

1. A cassette loading system comprising:
cassette holder means (12; 204; 301; 104) for holding a cassette;
transport means (36 to 44, 50, 60; 216, 214, 213; 115 to 119, 126 to 128, 114, 121) for horizontally and then vertically transporting the cassette;

detection means (28; 224'; 304b; 106) for detecting completion of horizontal transporting of the cassette;
means (29; 17a; 227; 316; 561; 107, 108) for inhibiting vertical movement of said cassette holder; and
release means (27; 230; 234; 317, 310d; 562, 563, 527a; 109) arranged to release said inhibition by said inhibiting means in response to the detection by said detection means of the completion of the horizontal transport of said cassette;
characterised in that the transport means includes vertical transporting means which comprises a rotatably drivable cam member (40; 214; 310; 119) having a spiral cam (40b; 215; 310a; 120) and a cam follower (50; 213; 303c; 121) engageable with said spiral cam and coupled to drive the cassette holder vertically as the cam member rotates by virtue of its engagement with said spiral cam.

2. A cassette loading system according to claim 1, the system further including;
a holder arm means (13; 210; 303; 103) pivotally coupled to the cassette holder means (12) and rotatable about a horizontal axis extending perpendicular to the direction of horizontal travel of the cassette, said cam follower being connected to said holder arm means so as to apply a driving force to rotate said holder arm means and thereby drive said cassette holder vertically.

3. A cassette loading system according to claim 2, further including guide means (14, 15; 220, 220') for guiding the cassette holder as it moves vertically so as to maintain a generally horizontal orientation of the cassette.

4. A cassette loading system according to any of claims 1 to 3 wherein said inhibiting means comprises;
an L-shaped guide (17) in a fixed frame member and having a first horizontal portion (17a) and a second vertical portion (17b), and a projection (29) coupled to the cassette holder means and in engagement with said guide (17), the vertical movement of the cassette holder means being inhibited by engagement of said projection (29) with said first horizontal portion (17a) and said projection (29) being arranged to be brought into engagement with said second vertical portion (17b) by said release means (27) in response to said detection by said detection means (28), said projection (29) being then movable vertically along said second vertical portion (17b) to permit the cassette holder means to be vertically driven by said transport means (36 to 44, 50, 60).

5. A cassette loading system according to claim 4, including;
an elongate lever (27) mounted on the cassette holder means and having a detection portion (28) constituting said detection means and positioned so as to be engaged and moved horizontally by the cassette as it completes its horizontal transport, said lever (27) having a horizontally extending portion constituting said release means and carrying said projection (29) at a position spaced horizontally from said detection portion (28), horizontal movement of said lever (27) by the cassette acting to bring said projection (29) into engagement with said second vertical portion of said L-shaped guide (17).

6. A cassette loading system according to any of claims 1 to 3 wherein said inhibiting means comprises a movable stop member (227; 316; 561) engageable with a projection member (212; 303b; 50) projecting from said cassette holder means and wherein said release means (230, 234; 317, 310d; 562, 563, 527a) is operable to move said stop member to release said inhibition.

7. A cassette loading system according to claim 6 wherein said release means is arranged to move said stop member using drive power derived from the rotational drive of said cam member (214; 310; 119).

8. A cassette loading system according to claim 7 including a clutch mechanism (231, 232; 561, 562, 564) for coupling said derived drive power for operating said release means to move said stop member (227; 316; 561).

9. A cassette loading system according to any preceding claim further including lock means (224, 235; 239, 235; 304c, 310b; 527a) for locking said release means against releasing said inhibiting means until said detection means detects said completion of horizontal transport of said cassette.

10. A cassette loading system according to claim 9 wherein said release means comprises a rotatable clutch driven member (234; 310d; 563) and wherein said lock means is operable in a first position to prevent rotation of said clutch driven member from a first position in which said release means holds the inhibiting means in its inhibiting condition to a second position in which said rotation of said clutch driven member is allowed.

11. A cassette loading system according to any preceding claim wherein said inhibiting means is operable when released by said release means to allow an initial vertical movement of said cassette holder means to bring said cam follower into driven engagement with said spiral cam of said cam member to effect the vertical drive of said cassette holder means.

12. A cassette loading system according to claim 8 wherein said stop member is an element (561) of said clutch mechanism.

13. A cassette loading system according to any preceding claim including preventing means (318, 310f, 310g) for preventing said release means (317, 310d) from releasing said inhibiting means (316) during a predetermined rotational phase of said cam member (310).

14. A cassette loading system according to claim 13 when dependent on claim 10, wherein said preventing means comprises a lock lever (318) having a first cam follower portion (318a) in engagement with an operating cam (310f) formed on said cam member (310) and a second stop portion (318b) movable in accordance with the movement of said first cam follower portion (318a) to selectively prevent or permit the rotation of said clutch driven member (310d) in accordance with the rotation of said cam member (310).

15. A cassette loading system according to claim 1 wherein the transport means includes horizontal transporting means (114, 126 to 133) for driving the cassette horizontally toward an inner position thereof in which it is held in the cassette holder means (104), and wherein said horizontal transporting means (114, 126, 133) includes force limiting means (130 to 133) for limiting the horizontal transport force to be applied to the cassette.

16. A cassette loading system according to claim 15 wherein said horizontal transporting means comprises driven roller means (114) arranged to be pressed against the cassette, said force limiting means comprising a torque limiter (130 to 133) provided in a drive system for the driven roller means.

17. A cassette loading system according to claim 1 wherein said transport means includes horizontal transporting means which comprises driven roller means (114) arranged to be pressed against an inserted cassette, said roller means being mounted on a roller shaft (122) which is rotatably mounted relative to a frame member (101) of the system by a bearing collar (124), said bearing collar having first and second opposite projections (124a, 124b) extending away from the shaft axis (122), the first said projection (124a) being engaged with the frame member, and a sensor (130) being arranged to detect movement of the second projection (124b) caused by displacement of the bearing collar as a cassette inserted between a base surface of the cassette holder means and said roller means lifts said roller means (114) and thereby also said shaft and bearing collar, said roller means being driven in response to such detection by said sensor.

18. A cassette loading system according to any preceding claim wherein said cassette holder means includes projection means (152) for engaging in corresponding groove means (8) in a face of said cassette to prevent incorrect loading thereof, and a wall for engaging the opposing face of said cassette.

19. A cassette loading system according to any preceding claim wherein the cassette holder means has a cassette inlet and a projection (54) facing towards said inlet at a portion of the cassette holder remote from said inlet, said projection being positioned to operate a cover release projection (7) of the cassette for releasing a locking means which normally locks the cover (3) of the cassette (A) in its closed position.

20. A cassette loading system according to any preceding claim, wherein the system is arranged so that a video cassette to be loaded into it is to be inserted with a narrow end first.

**Patentansprüche**

1. Kassetten-Ladesystem mit:
einem Kassettenhalter (12; 204; 301; 104) zum Halten einer Kassette,

Transportmitteln (36-44, 50, 60; 216. 214, 213; 115-119, 126-128, 114, 121) zum waagerechten und anschließenden vertikalen Transport der Kassette,

Abtastmitteln (28; 224'; 304b; 106) zum Abtasten der Vollendung des waagerechten Kassettentransports,

Mitteln (29; 17a; 227; 316; 561; 107, 108) zum Verhindern der vertikalen Bewegung des Kassettenhalters und

Freigabemitteln (27, 230; 234; 317, 310d; 562, 563, 527a; 109), die so angeordnet sind. daß sie die Wirkung der Verhinderungsmittel aufheben. wenn durch die Abtastmittel die Vollendung des waagerechten Kassettentransports festgestellt wird,

dadurch gekennzeichnet, daß die Transportmittel vertikale Transportmittel umfassen, die ein drehantreibbares Nockenelement (40; 214; 310; 119) mit einem spiralförmigen Nocken (40b, 215; 310a; 120) und einen Nockenfolger (50; 213; 303c; 121) aufweisen, der mit dem spiralförmigen Nocken in Berührung tritt und so gekoppelt ist, daß er den Kassettenhalter aufgrund der Berührung mit dem vertikalen Nocken in vertikaler Richtung antreibt, wenn das Nockenelement sich dreht.

2. Kassetten-Ladesystem nach Anspruch 1, mit Haltearm-Mitteln (13; 210; 303; 103) die gelenkig mit dem Kassettenhalter (12) gekoppelt und um eine rechtwinklig zur Richtung der waagerechten Bewegung der Kassette verlaufende waagerechte Achse drehbar sind, wobei der Nockenfolger so mit den Haltearn-Mitteln verbunden ist, daß er eine Antriebskraft zum Drehen der Haltearn-Mittel ausübt und so den Kassettenhalter in vertikaler Richtung antreibt.

3. Kassetten-Ladesystem nach Anspruch 2, mit Führungsmitteln (14, 15; 220, 220') zur Führung des Kassettenhalters bei seiner vertikalen Bewegung, so daß eine im wesentlichen waagerechte Orientierung der Kassette aufrechterhalten wird.

4. Kassetten-Ladesystem nach einem der Ansprüche 1 bis 3, bei dem die Verhinderungsmittel die folgenden Bauteile aufweisen:

eine in einem festen Rahmenteil angeordnete L-förmige Führung (17) mit einem waagerechten ersten Abschnitt (17a) und einem vertikalen zweiten Abschnitt (17b), und einen Vorsprung (29), der mit dem Kassettenhalter gekoppelt ist und mit der Führung (17) zur Anlage kommt, wobei die vertikale Bewegung des Kassettenhalters durch Anlage des Vorsprungs (29) an dem waagerechten ersten Abschnitt (17a) blockiert wird und der Vorsprung (29) so angeordnet ist, daß er durch die Freigabemittel (27) im Anschluß an das Signal der Abtastmittel (28) mit dem vertikalen zweiten Abschnitt (17b) zur Anlage gebracht wird und dann vertikal längs des vertikalen zweiten Abschnitts (17b) beweglich ist um den Antrieb des Kassettenhalters in vertikaler Richtung durch die Transportmittel (36-44, 50, 60) zu ernöglichen.

5. Kassetten-Ladesystem nach Anspruch 4, mit einem an dem Kassettenhalter montierten langgestreckten Hebel (27) mit einem Fühlerabschnitt (28), der die Abtastmittel bildet und so positioniert ist, daß er durch die Kassetten beaufschlagt und in waagerechter Richtung bewegt wird, wenn die Kassette ihre horizontale Bewegung vollendet, wobei der Hebel (27) einen waagerecht verlaufenden Abschnitt aufweist, der die Freigabemittel bildet und den Vorsprung (29) in einer Position in waagerechtem Abstand zu dem Fühlerabschnitt (28) trägt, und wobei die durch die Kassette verursachte horizontale Bewegung des Hebels (27) die Wirkung hat, daß der Vorsprung (29) mit dem vertikalen zweiten Abschnitt der L-förmigen Führung (17) in Eingriffgebracht wird.

6. Kassetten-Ladesystem nach einem der Ansprüche 1 bis 3, bei dem die Verhinderungsmittel einen beweglichen Anschlag (227; 316; 561) für einen von dem Kassettenhalter vorspringenden Vorsprung (212; 303b; 50) aufweisen und bei dem die Freigabemittel (230; 234; 317; 310d; 562, 563, 527a) so betätigbar sind, daß sie den Anschlag bewegen, um die Blockierung aufzuheben.

7. Kassetten-Ladesystem nach Anspruch 6, bei dem Freigabemittel so angeordnet sind, daß sie den Anschlag mit Hilfe der von dem Drehantrieb für das Nockenelement (314; 310; 119) gelieferten Antriebskraft antreiben.

8. Kassetten-Ladesystem nach Anspruch 7, mit einem Kupplungsmechanismus (231, 232; 561, 562, 564) zur Üertragung der von dem Drehantrieb abgeleiteten Antriebskraft zur Betätigung der Freigabemittel zum Bewegen des Anschlags (227; 316; 561).

9. Kassetten-Ladesystem nach einem der vorstehenden Ansprüche, mit Verriegelungsmitteln (224, 235; 239; 235; 304c, 310b; 527a) zum Verriegeln der Freigabemittel gegen die Freigabe der Verhinderungsmittel, bis die Abtastmittel die Beendigung des horizontalen Transports der Kassette abtasten.

10. Kassetten-Ladesystem nach Anspruch 9, bei dem die Freigabemittel ein drehbares angetriebenes Kupplungsteil (234; 310d; 563) aufweisen und bei dem die Verriegelungsmittel aus einer ersten Position, in der verhindert wird, daß sich das angetriebene Kupplungsteil aus einer ersten Position herausdreht, in der die Freigabemittel die Verhinderungsmittel im Blockierzustand halten, in eine zweite Position überführbar sind, in der die Drehung des angetriebenen Kupplungsteils ernöglicht wird.

11. Kassetten-Ladesystem nach einem der vorstehenden Ansprüche, bei dem die Verhinderungsmittel nach der Freigabe durch die Freigabemittel so betätigbar sind, daß sie eine anfängliche vertikale Bewegung des Kassettenhalters ermöglichen, um den Nockenfolger in Antriebsberührung mit dem spiralförmigen Nocken des Nockenelements zu bringen, so daß die vertikale Antriebsbewegung des Kassettenhalters bewirkt wird.

12. Kassetten-Ladesystem nach Anspruch 8, bei dem der Anschlag ein Element (561) des Kupplungsmechanismus ist.

13. Kassetten-Ladesystem nach einem der vorstehenden Ansprüche, mit Sperrmitteln (318, 310f, 310g), die verhindern, daß die Freigabemittel (317, 310d) die Verhinderungsmittel (316) während einer bestimmten Phase der Drehbewegung des Nockenelements (310) freigeben.

14. Kassetten-Ladesystem nach Anspruch 13 in der Rückbeziehung auf Anspruch 10, bei dem die Sperrmittel einen Sperrhebel (318) mit einem ersten Nockenfolgerabschnitt (318a) in Eingriff mit einem an dem Nockenelement (310) ausgebildeten Betätigungsnocken (310f) und einem zweiten Anschlagabschnitt (318b) aufweisen, wobei der Anschlagabschnitt entsprechend der Bewegung des ersten Nockenfolgerabschnitts (318a) bewegbar ist, um die Drehung des angetriebenen Kupplungsteils (310d) mit der Drehung des Nockenelements (310) wahlweise zu verhindern oder zu gestatten.

15. Kassetten-Ladesystem nach Anspruch 1, bei dem die Transportmittel waagerechte Transportmittel (114, 126-133) aufweisen zum waagerechten Antrieb der Kassette in Richtung auf einen inneren Abschnitt derselben, in dem sie in dem Kassettenhalter (104) gehalten wird, und bei dem die waagerechten Transportmittel (114, 126, 133) Kraftbegrenzungsmittel (130-133) aufweisen, um die auf die Kassette in waagerechter Richtung ausgeübte Antriebskraft zu begrenzen.

16. Kassetten-Ladesystem nach Anspruch 15, bei dem die waagerechten Transportmittel angetriebene Rolleneinrichtungen (114) aufweisen, die so angeordnet sind, daß sie gegen die Kassette angedrückt werden, und bei dem die Begrenzungsmittel einen Drehmomentbegrenzer (130-133) in dem Atriebssystem für die angetriebene Rolleneinrichtung aufweisen.

17. Kassetten-Ladesystem nach Anspruch 1, bei dem die Transportmittel waagerechte Transportmittel umfassen. die eine angetriebene Rolleneinrichtung (114) aufweisen, die so angeordnet ist, daß sie gegen eine eingeführte Kassette angedrückt wird, wobei die Rolleneinrichtung auf einer Rollen-Welle (122) montiert ist, die mit Hilfe einer Lagerhülse (124) drehbar in Bezug auf ein Rahmenteil (101) des Systems montiert ist, wobei die Lagerhülse entge gengesetzte erste und zweite Vorsprünge (124a, 124b) aufweist, die von der Achse der Welle (122) abstreben und von denen der erste Vorsprung (124a) mit dem Rahmenteil in Berührung steht, und wobei ein Sensor (130) so an geordnet ist, daß er die Bewegung des zweiten Vorsprungs (124b) abtastet, die durch die Verlagerung der Lagerhülse verursacht wird, wenn eine Kassette zwischen einer Basis-Oberfläche des Kassettenhalters und der Rolleneinrichtung eingeführt wird und die Rolleneinrichtung (114) und damit auch die Welle und die Lagerhülse anhebt, wobei die Rolleneinnchtung im Anschluß an einen solchen Abtastvorgang des Sensors angetrieben wird.

18. Kassetten-Ladesystem nach einem der vorstehenden Ansprüche, bei dem der Kassettenhalter vorspringende Mittel (152), die in eine entsprechende Nut (8) oder entsprechende Nuten in einer Fläche der Kassette eingreifen um ein fehlerhaftes Laden der Kassete zu verhindern, und eine Wand als Anlage für die entgegengesetzte Oberfläche der Kassette aufweisen.

19. Kassetten-Ladesystem nach einem der vorstehenden Ansprüche. bei dem der Kassettenhalter einen Kassetten-Einlaß und einen in Richtung auf den Einlaß vorspringenden Vorsprung (54) in einem von dem Einlaß entfernten Abschnitt des Kassettenhalters aufweist, wobei der Vorsprung so positioniert ist, daß der einen Deckel-Freigabevorsprung (7) der Kassette betätigt um Verriegelungsmittel zu entriegeln, die nornalerweise den Deckel (3) der Kassette (A) in der geschlossenen Stellung blockieren.

20. Kassetten-Ladesystem nach einem der vorstehenden Ansprüche, bei dem das System so angeordnet ist, daß eine zu ladende Videokassette mit einem schmalen Ende voraus eingefühet werden muß.

**Revendications**

1. Système de chargement de cassette comprenant:

des moyens porte-cassette (12; 204; 301; 104) destinés à maintenir une cassette;

des moyens d'entraînement (36 à 44, 50, 60; 216, 214, 213; 115 à 119, 126 à 128, 114, 121) destinés à entraîner la cassette horizontalement puis verticalement; des moyens de détection (28; 224'; 304b; 106) destinés à détecter la fin de l'entraînement horizontal de la cassette;

des moyens (29; 17a; 227; 316; 561; 107, 108) destinés à inhiber le déplacement vertical dudit porte-cassette; et des moyens de libération (27; 230; 234; 317, 310d; 562, 563, 527a; 109) disposés de manière à supprimer ladite inhibition par lesdlts moyens d'inhibition en réponse à la détection par lesdits moyens de détection de la fin de l'entraînement horizontal de ladite cassette;

caractérisé en ce que les moyens d'entraînement comportent des moyens d'entraînement vertical qui comprennent un élément de came apte à être entraîné en rotation (40; 214; 310; 119) comportant une came en spirale (40b; 215; 310a; 120) et un élément suiveur de came (50; 213; 303c; 121) apte à s'engager avec ladite came en spirale et relié de manière à entraîner le porte-cassette verticalement alors que l'élément de came tourne en raison de son engagement avec ladite came en spirale.

2. Système de chargement de cassette selon la revendication 1, ce système comportant en outre:

des moyens de bras de maintien (13; 210; 303; 103) reliés à pivotement aux moyens porte-cassette (12) et aptes à tourner autour d'un axe horizontal s'étendant perpendiculairement à la direction du déplacement horizontal de la cassette, ledit élément suiveur de came étant relié auxdits moyens de bras de maintien de manière à appliquer une force d'entraînement pour faire tourner lesdits moyens de bras de maintien et entraîner ainsi ledit porte-cassette verticalement.

3. Système de chargement de cassette selon la revendication 2, comportant en outre des moyens de guidage (14, 15; 220, 220') destinés à guider le porte-cassette pendant qu'il se déplace verticalement de manière à maintenir la cassette dans une orientation généralement horizontale.

4. Système de chargement de cassette selon l'une quelconque des revendications 1 à 3 dans lequel lesdits moyens d'inhibition comprennent: un guide en forme de L (17) dans un élément de cadre fixe et comportant une première partie horizontale (17a) et une seconde partie verticale (17b), et une saillie (29) reliée aux moyens porte-cassette et engagée avec ledit guide (17), le déplacement vertical des moyens porte-cassette étant inhibé par l'engagement de ladite saillie (29) avec ladite première partie horizontale (17a) et ladite saillie (29) étant disposée de manière à être amenée dans une position d'engagement avec ladite seconde partie verticale (17b) par lesdits moyens de libération (27) en réponse à ladite détection par lesdits moyens de détection (28), ladite saillie (29) étant alors 'apte à se déplacer verticalement le long de ladite seconde partie verticale (17b) afin d'autoriser l'entraînement vertical desdits moyens porte-cassette par lesdits moyens d'entraînement (36 à 44, 50, 60).

5. Système de chargement de cassette selon la revendication 4, comprenant: un levier de forme allongée (27) monté sur les moyens porte-cassette et comportant une partie de détection (28) constituant lesdits moyens de détection et positionnée de manière à être engagée et déplacée horizontalement par la cassette lorsque se termine son déplacement horizontal, ledit levier (27) comportant une partie s'étendant horizontalement qui constitue lesdits moyens de libération et porte ladite saillie (29) à un emplacement espacé horizontalement de ladite partie de détection (28), le déplacement horizontal dudit levier (27) par la cassette ayant pour effet d'amener ladite saillie (29) dans une position d'engagement avec ladite seconde partie verticale dudit guide en forme de L (17).

6. Système de chargement de cassette selon l'une quelconque des revendications 1 à 3 dans lequel lesdits moyens d'inhibition comprennent un élément de butée mobile (227; 316; 561) apte à s'engager avec un élément en saillie (212; 303b; 50) faisant saillie à partir desdits moyens porte-cassette et dans lequel lesdits moyens de libération (230, 234; 317, 310d; 562, 563, 527a) sont aptes à déplacer ledit élément de butée afin de supprimer ladite inhibition.

7. Système de chargement de cassette selon la revendication 6 dans lequel lesdits moyens de libération sont disposés de manière à déplacer ledit élément de butée en utilisant la puissance d'entraînement obtenue de l'entraînement en rotation dudit élément de came (214; 310; 119).

8. Système de chargement de cassette selon la revendication 7 comportant un mécanisme d'embrayage (231, 232; 561, 562, 564) destiné à transmettre ladite puissance d'entraînement obtenue servant à actionner lesdits moyens de libération pour déplacer ledit élément de butée (227; 316; 561).

9. Système de chargement de cassette selon l'une quelconque des revendications précédentes comportant en outre des moyens de verrouillage (224, 235; 239, 235; 304c, 310b; 527a) destinés à verrouiller lesdits moyens de libération pour les empêcher de libérer lesdits moyens d'inhibition jusqu'à ce que lesdits moyens de détection détectent ladite fin de l'entraînement horizontal de ladite cassette.

10. Système de chargement de cassette selon la revendication 9 dans lequel lesdits moyens de libération comprennent un élément apte à tourner à commande par embrayage (234; 310d; 563) et dans lequel lesdits moyens de verrouillage sont aptes à être actionnés dans une première position pour empêcher la rotation dudit élément à commande par embrayage depuis une première position dans laquelle lesdits moyens de libération maintiennent les moyens d'inhibition dans leur condition inhibante vers une seconde position dans laquelle ladite rotation dudit élément à commande par embrayage est permise.

11. Système de chargement de cassette selon l'une quelconque des revendications précédentes dans lequel lesdits moyens d'inhibition sont aptes à être actionnés lorsqu'ils sont libérés par lesdits moyens de libération afin de permettre le déplacement vertical initial desdits moyens porte-cassette pour amener ledit élément suiveur de came à s'engager à entraînement avec ladite came en spirale dudit élément de came pour effectuer l'entraînement vertical desdits moyens porte-cassette.

12. Système de chargement de cassette selon la revendication 8 dans lequel ledit élément de butée est un élément (561) dudit mécanisme d'embrayage.

13. Système de chargement de cassette selon l'une quelconque des revendications précédentes comportant des moyens d'interdiction (318, 310f, 310g) pour interdire auxdits moyens de libération (317, 310d) de libérer lesdits moyens d'inhibition (316) pendant une phase de rotation prédéterminée dudit élément de came (310).

14. Système de chargement de cassette selon la revendication 13 lorsqu'elle dépend de la revendication 10, dans lequel lesdits moyens d'interdiction comprennent un levier de verrouillage (318) comportant une première partie suiveuse de came (318a) engagée avec une came d'actionnement (310f) formée sur ledit élément de came (310) et une seconde partie de butée (318b) apte à se déplacer conformément au déplacement de ladite première partie suiveuse de came (318a) pour interdire ou autoriser de manière sélective la rotation dudit élément à commande par embrayage (310d) conformément à la rotation dudit élément de came (310).

15. Système de chargement de cassette selon la revendication 1 dans lequel les moyens d'entraînement comportent des moyens de transport horizontal (114, 126 à 133) destinés à entraîner la cassette horizontalement vers une position intérieure de celle-ci dans laquelle elle est maintenue dans les moyens porte-cassette (104), et dans lequel lesdits moyens d'entraînement horizontal (114, 126, 133) comportent des moyens de limitation de force (130 à 133) pour limiter la force d'entraînement horizontal à appliquer à la cassette.

16. Système de chargement de cassette selon la revendication 15 dans lequel lesdits moyens d'entraînement horizontal comprennent des moyens de galet mené (114) disposés de manière à appuyer contre la cassette, lesdits moyens de limitation de force comprenant un limiteur de couple (130 à 133) prévu dans un système d'entraînement destiné aux moyens de galet mené.

17. Système de chargement de cassette selon la revendication 1 dans lequel lesdits moyens d'entraînement comportent des moyens d'entraînement horizontal qui comprennent des moyens de galet mené (114) disposés de manière à appuyer contre une cassette insérée, lesdits moyens de galet étant montés sur un arbre de galet (122) qui est monté de manière à pouvoir tourner relativement à un élément de cadre (101) du système par un collier de support (124), ledit collier de support comportant des première et seconde saillies opposées (124a, 124b) s'étendant à l'écart de l'axe (122), ladite première saillie (124a) étant engagée avec l'élément de cadre, et un détecteur (130) étant disposé de manière à détecter le déplacement de la seconde saillie (124b) dû au déplacement du collier de support pendant qu'une cassette insérée entre une surface de base des moyens porte-cassette et lesdits moyens de galet soulève lesdits moyens de galet (114) et, par là, également ledit arbre et ledit collier de support, lesdits moyens de galet étant entraînés en réponse à une telle détection par ledit détecteur.

18. Système de chargement de cassette selon l'une quelconque des revendications précédentes dans lequel lesdits moyens porte-cassette comportent des moyens de saillie (152) destinés à s'engager dans des moyens de rainure correspondants (8) d'une face de ladite cassette afin d'empêcher son chargement incorrect, et une paroi destinée à s'engager avec la face opposée de ladite cassette.

19. Système de chargement de cassette selon l'une quelconque des revendications précédentes dans lequel les moyens porte-cassette comportent une ouverture pour cassette et une saillie (54) tournée vers ladite ouverture au niveau d'une partie du porte-cassette éloignée de ladite ouverture, ladite saillie étant positionnée de manière à actionner une saillie de déblocage de couvercle (7) de la cassette pour libérer des moyens de verrouillage qui normalement verrouillent le couvercle (3) de la cassette (A) dans sa position fermée.

20. Système de chargement de cassette selon l'une quelconque des revendications précédentes, dans lequel le système est disposé de manière à ce qu'une vidéocassette à charger dans celui-ci doive être insérée par son extrémité étroite.

## FIG. 1

## FIG. 2

# FIG. 3

# FIG. 4

# FIG. 5

11 20 14 16 19 18

17 { 17a 17b } 15 11a

# FIG. 6

53 54 5 6 4 1 51 12 52 8 B

3

FIG. 7

FIG. 8

FIG. 9

FIG. 10

## FIG. 11

## FIG. 14

## FIG. 15

## FIG. 12

## FIG. 13

## FIG. 20

## FIG. 16

FIG. 17

FIG. 18

FIG. 19

## FIG. 21

## FIG. 22

# FIG. 23

# FIG. 24

## FIG. 25

## FIG. 26

# FIG. 27

# FIG. 28

## FIG. 29

## FIG. 30

## FIG. 31

## FIG. 32

# FIG. 33

(1)

(2)

(3)

FIG. 34

FIG. 35

EP 0 150 128 B1

FIG. 36

FIG. 37

## FIG. 38

## FIG. 39

## FIG. 40

## FIG. 41

21